# EUROPEAN PATENT APPLICATION

(11) **EP 2 432 094 A1**
(43) Date of publication of application: **21.03.2012**
(21) Application number: 09851648.7
(22) Date of filing: 26.11.2009
(51) Int. Cl.: H02J 7/00, B60L 11/18, H01R 13/46

(54) **CHARGING DEVICE**

(71) Applicant: Toyota Jidosha Kabushiki Kaisha, Toyota-shi, Aichi 471-8571 (JP)
(72) Inventor: ICHIKAWA, Shinji, Toyota-shi Aichi 471-8571 (JP)
(74) Representative: TBK
(86) International application number: PCT/JP2009/069905
(87) International publication number: WO 2011/064856

(57) **Abstract**

A control pilot circuit (332) and a temperature sensor (342) are provided within a drum (502) of a cable reel (30). The temperature sensor (342) detects the temperature of a charging cable (20) wound on the drum (502) and outputs the temperature to the control pilot circuit (332). The control pilot circuit (332) generates a pilot signal having a duty ratio which is determined in advance in accordance with an allowable current value of the charging cable (20), and transmits the signal to a vehicle through the charging cable (20). The control pilot circuit (332) further changes the duty ratio of the pilot signal based on the detected value of the temperature of the charging cable (20) received from the temperature sensor (342).

## Description

### TECHNICAL FIELD

The present invention relates to a charging apparatus, and particularly to a charging apparatus for supplying charging electric power to a vehicle configured to be chargeable by a power supply located externally to the vehicle.

### BACKGROUND ART

Japanese Patent Laying-Open No. 2009-77535 (Patent Literature 1) discloses a vehicle charging system for supplying electric power to a vehicle from a power supply located externally to the vehicle, the vehicle being configured to be chargeable by the power supply located externally to the vehicle (hereinafter also referred to simply as "external power supply" and further, charging of a power storage device mounted on the vehicle by an external power supply is also referred to simply as "external charging"). In this vehicle charging system, a charging cable includes a CCID (Charging Circuit Interrupt Device), and the CCID includes a control pilot circuit.

When a plug of the charging cable is connected to the external power supply and a connector of the charging cable is connected to a connector of the vehicle, the control pilot circuit generates a pilot signal CPLT having a predetermined duty ratio, and transmits the generated pilot signal CPLT through a control pilot line to the vehicle.

Here, by the duty ratio of pilot signal CPLT, the vehicle is informed of an allowable current value (rated current) of the charging cable. Over the vehicle, charging control is performed so that the charging current will not exceed the allowable current value (see Patent Literature 1).

### CITATION LIST

### PATENT LITERATURE

PTL 1: Japanese Patent Laying-Open No. 2009-77535
PTL 2: Japanese Patent Laying-Open No. 2000-255248
PTL 3: Japanese Patent Laying-Open No. 2003-244832
PTL 4: Japanese Patent Laying-Open No. 8-33121

### SUMMARY OF INVENTION

### TECHNICAL PROBLEM

It is supposed that a reel capable of winding a charging cable is provided. When external charging is performed while the charging cable is wound on the reel, the charging cable could be overheated. If the charging cable is overheated, charging control performed in the vehicle must alert the vehicle to reduce the charging current. The above-referenced publications, however, give no particular consideration to this issue.

The present invention has accordingly been made to solve the problem above, and an object of the invention is to provide a charging apparatus capable of preventing a charging cable from being overheated.

### SOLUTION TO PROBLEM

According to the present invention, the charging apparatus is a charging apparatus for supplying electric power from an external power supply to a vehicle. The external power supply is located externally to the vehicle. The vehicle is configured to be chargeable by the external power supply. The charging apparatus includes a charging cable, a reel, a temperature sensor, and a controller. The charging cable is capable of electrically connecting the external power supply with the vehicle. The reel is capable of winding the charging cable. The temperature sensor is provided to the reel for detecting a temperature of the charging cable. The controller is configured to generate a pulse signal having a duty ratio determined in advance in accordance with a predetermined allowable current value of the charging cable, and to be able to transmit the generated pulse signal to the vehicle. The controller changes the duty ratio of the pulse signal in accordance with the temperature of the charging cable detected by the temperature sensor.

Preferably, the controller changes the duty ratio so that the allowable current value of the charging cable is smaller as the temperature of the charging cable detected by the temperature sensor is higher.

Further, according to the present invention, the charging apparatus is a charging apparatus for supplying electric power from an external power supply to a vehicle. The external power supply is located externally to the vehicle. The vehicle is configured to be chargeable by the external power supply. The charging apparatus includes a charging cable, a reel, and a controller. The charging cable is capable of electrically connecting the external power supply with the vehicle. The reel is capable of winding the charging cable. The controller is configured to generate a pulse signal having a duty ratio determined in advance in accordance with a predetermined allowable current value of the charging cable, and to be able to transmit the generated pulse signal to the vehicle. The controller changes the duty ratio of the pulse signal in accordance with a wound length of the charging cable wound by the reel.

Preferably, the controller changes the duty ratio so that the allowable current value of the charging cable is smaller as the wound length of the charging cable wound by the reel is larger.

Preferably, the charging apparatus further includes a plug and a plug temperature sensor. The plug is used for connecting the charging cable to the external power supply. The plug temperature sensor is used for detecting a temperature of the plug. The controller further changes the duty ratio of the pulse signal in accordance with the temperature of the plug detected by the plug temperature sensor.

Preferably, the charging apparatus further includes a voltage sensor. The voltage sensor is used for detecting a voltage of the external power supply. The controller further changes the duty ratio of the pulse signal in accordance with a voltage drop of the external power supply.

### ADVANTAGEOUS EFFECTS OF INVENTION

The present invention provides the reel capable of winding the charging cable. In accordance with the temperature of the charging cable that is detected by the temperature sensor provided to the reel, or in accordance with the wound length of the charging cable wound by the reel, the duty ratio of a pulse signal (pilot signal CPLT) can be changed, the duty ratio being used to convey the allowable current value of the charging cable. Thus, the temperature condition of the charging cable is conveyed to the vehicle by means of the pulse signal. In the case where the charging cable could be overheated, charging control over the vehicle can take measures for example to reduce the charging current. The present invention can therefore prevent the charging cable from being overheated.

### BRIEF DESCRIPTION OF DRAWINGS

Fig. 1 is an overall diagram of a vehicle charging system for which a charging apparatus according to a first embodiment of the present invention is used.
Fig. 2 is an overall block diagram of a vehicle charged by an external power supply by means of the charging apparatus.
Fig. 3 is a diagram for illustrating an electrical configuration of the charging system.
Fig. 4 is a schematic configuration diagram of the inside of a charging cable.
Fig. 5 is a diagram showing a waveform of a pilot signal generated by a control pilot circuit.
Fig. 6 is a timing chart of the pilot signal and switches when external charging is performed.
Fig. 7 is a diagram showing a configuration of a cable reel shown in Fig. 1.
Fig. 8 is a diagram showing a relation between an allowable current value of the charging cable and a duty ratio of the pilot signal.
Fig. 9 is a diagram showing a relation between the temperature of the charging cable and the duty ratio of the pilot signal.
Fig. 10 is a flowchart for illustrating a process procedure for generation of the pilot signal.
Fig. 11 is a diagram showing a relation between the allowable current value of the charging cable and the duty ratio of the pilot signal according to a modification.
Fig. 12 is a diagram showing a relation between the temperature of the charging cable and the duty ratio of the pilot signal according to the modification.
Fig. 13 is a diagram showing a configuration of a cable reel according to a second embodiment.
Fig. 14 is a diagram showing a relation between the wound length of the charging cable wound by the cable reel and the duty ratio of the pilot signal.
Fig. 15 is a flowchart for illustrating a process procedure for generation of the pilot signal according to the second embodiment.
Fig. 16 is a diagram showing a relation between the wound length of the charging cable and the duty ratio of the pilot signal.
Fig. 17 is a diagram showing a configuration of a cable reel according to a third embodiment.
Fig. 18 is a diagram showing a relation between the temperature of a plug and the duty ratio of the pilot signal.
Fig. 19 is a diagram showing a configuration of a cable reel according to a fourth embodiment.
Fig. 20 is a diagram showing a relation between the voltage of an external power supply and the duty ratio of the pilot signal.

### DESCRIPTION OF EMBODIMENTS

Embodiments of the present invention will hereinafter be described in detail with reference to the drawings. In the drawings, the same or corresponding components are denoted by the same reference characters, and a description thereof will not be repeated.

### [First Embodiment]

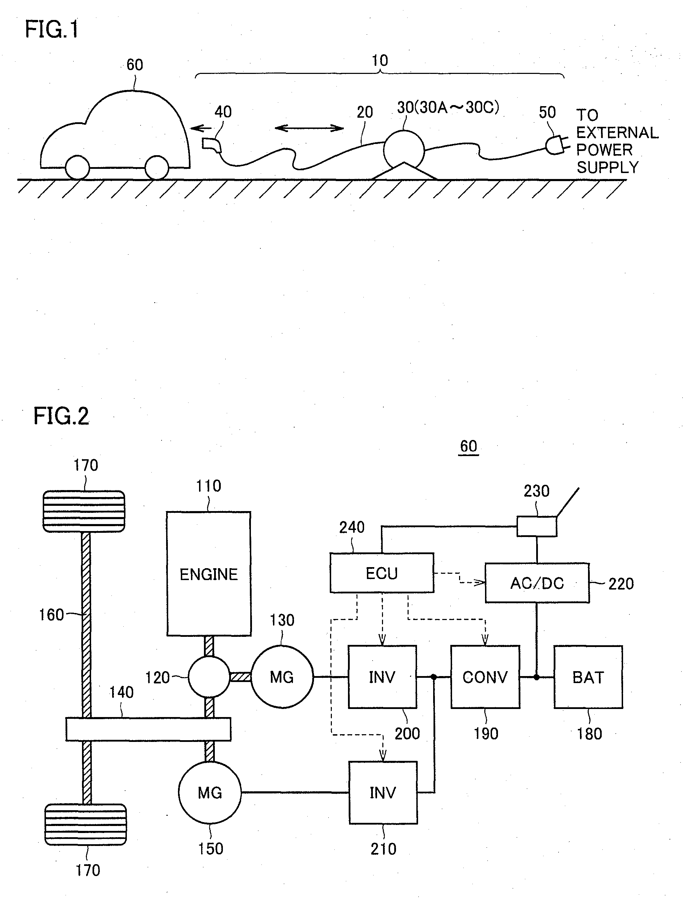

Fig. 1 is an overall diagram of a vehicle charging system for which a charging apparatus according to a first embodiment of the present invention is used. Referring to Fig. 1, this vehicle charging system includes a charging apparatus 10 and a vehicle 60. Vehicle 60 is an electrically powered vehicle mounted with a power storage device and a motor serving as motive power sources for the vehicle to travel, and is for example an electric vehicle, hybrid vehicle or the like. Vehicle 60 is configured so that charging apparatus 10 can be used to charge the power storage device from an external power supply (not shown).

Charging apparatus 10 includes a charging cable 20, a cable reel 30, a connector 40, and a plug 50. Charging cable 20 is an electric power line for supplying charging electric power from an external power supply to vehicle 60. Charging cable 20 is connectable to the external power supply and to vehicle 60 by means of plug 50 and connector 40, respectively, and capable of electrically connecting the external power supply and vehicle 60 to each other.

Cable reel 30 is configured to be able to wind up charging cable 20, and charging cable 20 can freely be drawn out in accordance with the distance between the external power supply and vehicle 60. Connector 40 is a terminal for connecting charging cable 20 to vehicle 60, and plug 50 is a terminal for connecting charging cable 20 to the external power supply. It is noted that plug 50 may not be provided and instead charging cable 20 may be fixedly connected to the external power supply.

### Configuration of Vehicle 60

Fig. 2 is an overall block diagram of vehicle 60 which is charged from an external power supply by means of charging apparatus 10. By way of example, Fig. 2 illustrates the case where vehicle 60 is a hybrid vehicle. Referring to Fig. 2, vehicle 60 includes an engine 110, a power split device 120, motor generators 130, 150, a reduction gear 140, a drive shaft 160, and drive wheels 170. Vehicle 60 further includes a power storage device 180, a boost converter 190, inverters 200, 210, an AC/DC converter 220, an inlet 230, and an ECU (Electronic Control Unit) 240.

Engine 110 and motor generators 130, 150 are coupled to power split device 120. Vehicle 60 is caused to travel by drive power from at least one of engine 110 and motor generator 150. Motive power generated by engine 110 is split into two paths by power split device 120. Specifically, one of the paths is used to transmit the motive power through reduction gear 140 to drive shaft 160, and the other thereof is used for transmitting the motive power to motor generator 130.

Motor generator 130 is an AC rotating electric machine, and is a three-phase AC synchronous motor, for example. Motor generator 130 generates electric power by using the motive power of engine 110 split by power split device 120. For example, when a state of charge (also referred to as "SOC (State of Charge)") of power storage device 180 falls below a predetermined value, engine 110 starts and electric power is generated by motor generator 130. The electric power generated by motor generator 130 is converted from AC to DC by inverter 200, stepped down by boost converter 190, and then is stored in power storage device 180.

Motor generator 150 is an AC rotating electric machine, and is a three-phase AC synchronous motor, for example. Motor generator 150 generates drive power for the vehicle by using at least one of the electric power stored in power storage device 180 and the electric power generated by motor generator 130. The drive power of motor generator 150 is transmitted through reduction gear 140 to drive shaft 160.

When the vehicle is braked, motor generator 150 is driven by using kinetic energy of the vehicle, and motor generator 150 operates as a generator. Thus, motor generator 150 operates as a regenerative brake for converting braking energy into electric power. The electric power generated by motor generator 150 is stored in power storage device 180.

Power split device 120 is formed of a planetary gear train including a sun gear, a pinion gear, a carrier, and a ring gear. The pinion gear engages the sun gear and the ring gear. The carrier rotatably supports the pinion gear, and in addition, is coupled to a crankshaft of engine 110. The sun gear is coupled to a rotation shaft of motor generator 130. The ring gear is coupled to a rotation shaft of motor generator 150 and reduction gear 140.

Power storage device 180 is a rechargeable DC power supply, and is formed of a secondary battery such as nickel-metal hydride or lithium ion battery, for example. In addition to the electric power generated by motor generators 130 and 150, electric power supplied from an external power supply (not shown) and input from inlet 230 is also stored in power storage device 180. It is noted that a large-capacitance capacitor can also be employed as power storage device 180.

Boost converter 190 adjusts a DC voltage to be provided to inverters 200 and 210 to be equal to or higher than the voltage of power storage device 180, based on a control signal from ECU 240. Boost converter 190 is configured by a boost chopper circuit, for example.

Inverter 200 converts the electric power generated by motor generator 130 into DC power and outputs the DC power to boost converter 190, based on the control signal from ECU 240. Inverter 210 converts electric power supplied from boost converter 190 into AC power and outputs the AC power to motor generator 150, based on the control signal from ECU 240. It is noted that, at startup of engine 110, inverter 200 converts the electric power supplied from boost converter 190 into AC power and outputs the AC power to motor generator 130. When the vehicle is braked, inverter 210 converts the electric power generated by motor generator 150 into DC power and outputs the DC power to boost converter 190.

AC/DC converter 220 converts, when the vehicle is externally charged by means of charging apparatus 10 (Fig. 1), the charging electric power (AC) supplied from the external power supply through charging apparatus 10 connected to inlet 230, into DC power, and outputs the DC power to power storage device 180. Inlet 230 is an interface for connecting charging apparatus 10 to vehicle 60. When connector 40 (Fig. 1) of charging apparatus 10 is connected, inlet 230 informs ECU 240 of this fact. Inlet 230 also outputs the charging electric power supplied from charging apparatus 10 to AC/DC converter 220.

ECU 240 generates control signals for driving boost converter 190 and motor generators 130, 150, and outputs the generated control signals to boost converter 190 and inverters 200, 210. In addition, when the vehicle is externally charged, ECU 240 generates a control signal for driving AC/DC converter 220 to receive the charging electric power from inlet 230 and charge power storage device 180, and outputs the generated control signal to AC/DC converter 220.

### Configuration of Charging System

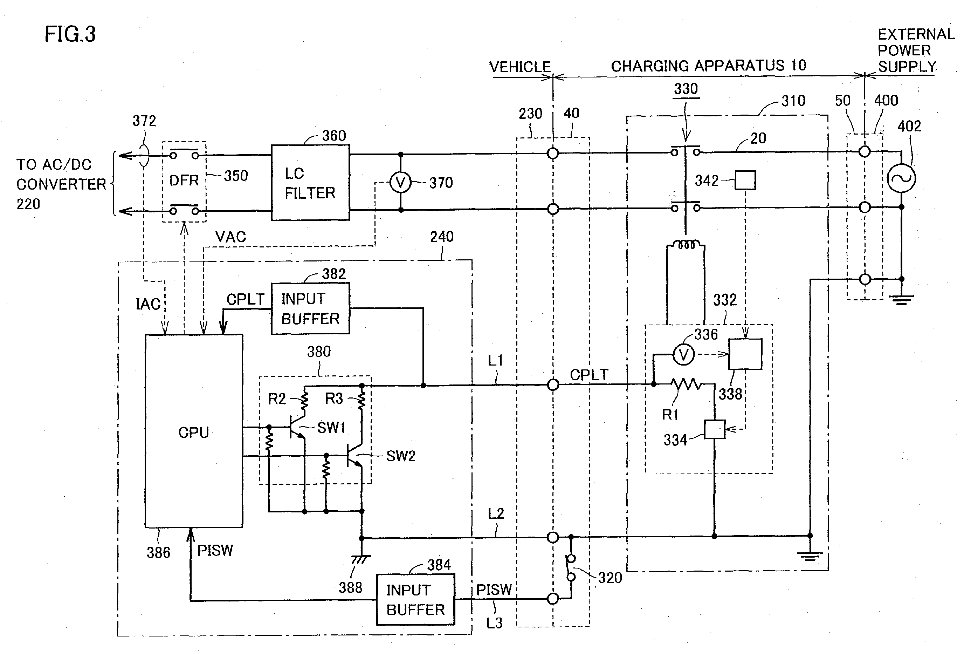

Fig. 3 is a diagram for illustrating an electrical configuration of the charging system. Referring to Fig. 3, when the vehicle is externally charged, the vehicle and an external power supply are connected to each other by charging apparatus 10.
Charging apparatus 10 includes charging cable 20, connector 40, plug 50, and a CCID (Charging Circuit Interrupt Device) 310. Plug 50 is connected to an outlet 400 of external power supply 402.

Connector 40 is connected to inlet 230 (Fig. 1) of vehicle 60. Connector 40 is provided with a limit switch 320. When connector 40 is connected to inlet 230, limit switch 320 is activated. Then, a cable connection signal PISW whose signal level changes in response to the activation of limit switch 320 is input to ECU 240 of vehicle 60.

CCID 310 includes a CCID relay 330, a control pilot circuit 332, and a temperature sensor 342. CCID relay 330 is provided on charging cable 20, and is turned on/off by control pilot circuit 332. Temperature sensor 342 is provided on cable reel 30 (Fig. 1). Temperature sensor 342 detects the temperature of charging cable 20, and outputs the value of the detected temperature to control pilot circuit 332.

Control pilot circuit 332 outputs a pilot signal CPLT to ECU 240 of the vehicle through connector 40 and inlet 230. This pilot signal CPLT is a signal for informing the vehicle's ECU 240 of an allowable current value (rated current) of charging cable 20, and for remotely controlling CCID relay 330 by ECU 240 based on the potential of pilot signal CPLT manipulated by ECU 240. Control pilot circuit 332 controls CCID relay 330 based on a change in the potential of pilot signal CPLT.

Control pilot circuit 332 includes an oscillator 334, a resistive element R1, a voltage sensor 336, and a CPLT-ECU 338. Oscillator 334 generates, based on a command received from CPLT-ECU 338, pilot signal CPLT which oscillates at a specified frequency (1 kHz for example) and a predetermined duty ratio. Voltage sensor 336 detects the potential of pilot signal CPLT and outputs the value of the detected potential to CPLT-ECU 338.

CPLT-ECU 338 receives respective detected values of voltage sensor 336 and temperature sensor 342. When the potential of pilot signal CPLT detected by voltage sensor 336 is around a specified potential V1 (12V for example), CPLT-ECU 338 controls oscillator 334 so that the oscillator generates a non-oscillating pilot signal CPLT. When the potential of pilot signal CPLT decreases from V1, CPLT-ECU 338 controls oscillator 334 so that the oscillator generates pilot signal CPLT oscillating at a specified frequency and a predetermined duty ratio.

It is noted that the potential of pilot signal CPLT is manipulated by switching of a resistance value of a resistive circuit 380 of ECU 240 as will be described later herein. In addition, the duty ratio is set based on the allowable current value of charging cable 20 that is determined in advance. The duty ratio which is set based on the allowable current value of charging cable 20 is changed in accordance with the temperature of charging cable 20 detected by temperature sensor 342 as will be described later herein. When the potential of pilot signal CPLT decreases to around a specified potential V3 (6V for example), control pilot circuit 332 turns on CCID relay 330.

It is noted that control pilot circuit 332 receives electric power to operate that is supplied from external power supply 402 when plug 50 is connected to outlet 400.

As for the vehicle, a DFR (Dead Front Relay) 350 and an LC filter 360 are provided on an electric power line between inlet 230 and AC/DC converter 220 (Fig. 2). DFR 350 is a relay for electrically connecting/disconnecting inlet 230 and AC/DC converter 220, and is turned on/off in response to the control signal from ECU 240. In other words, when the vehicle is externally charged, DFR 350 is turned on and inlet 230 is electrically connected to AC/DC converter 220. LC filter 360 is provided between DFR 350 and inlet 230, and prevents high-frequency noise generated in accordance with the switching operation of AC/DC converter 220 from being output to charging cable 20.

A voltage sensor 370 detects, when the vehicle is externally charged, a voltage VAC of external power supply 402 and outputs the detected value to ECU 240. A current sensor 372 detects, when the vehicle is externally charged, a current IAC supplied from external power supply 402 and outputs the detected value to ECU 240.

ECU 240 includes resistive circuit 380, input buffers 382, 384, and a CPU (Control Processing Unit) 386. Resistive circuit 380 includes pull-down resistors R2, R3 and switches SW1, SW2. Pull-down resistor R2 and switch SW1 are serially connected between a vehicle earth 388 and a control pilot line L1 through which pilot signal CPLT is communicated. Pull-down resistor R3 and switch SW2 are also serially connected between vehicle earth 388 and control pilot line L1. Switches SW1 and SW2 are turned on/off in response to a control signal from CPU 386.

This resistive circuit 380 manipulates the potential of pilot signal CPLT. Specifically, when connector 40 is connected to inlet 230, CPU 386 turns on switch SW1, and resistive circuit 380 lowers the potential of pilot signal CPLT to a specified potential V2 (9V for example) by using pull-down resistor R2. When preparation for charging is completed in the vehicle, CPU 386 turns on switch SW2, and resistive circuit 380 lowers the potential of pilot signal CPLT to a specified potential V3 by using pull-down resistors R2 and R3. As described above, the potential of pilot signal CPLT can be manipulated by means of resistive circuit 380 to thereby remotely control CCID relay 330 of CCID 310 by ECU 240.

Input buffer 382 receives pilot signal CPLT of control pilot line L1, and outputs the received pilot signal CPLT to CPU 386. Input buffer 384 receives cable connection signal PISW from a signal line L3 connected to limit switch 320 of connector 40, and outputs the received cable connection signal PISW to CPU 386.

A voltage is applied to signal line L3 from ECU 240. When connector 40 is connected to inlet 230, limit switch 320 is turned on to cause the potential of signal line L3 to become the ground level. In other words, cable connection signal PISW is set to the L (logical low) level when connector 40 is connected to inlet 230, and is set to the H (logical high) level when connector 40 is not connected to inlet 230.

CPU 386 determines whether or not external power supply 402 and the vehicle are connected, based on cable connection signal PISW and pilot signal CPLT. Specifically, CPU 386 detects that inlet 230 and connector 40 are connected, based on cable connection signal PISW received from input buffer 384, and detects that plug 50 and outlet 400 are connected, based on whether pilot signal CPLT received from input buffer 382 is input or not.

When it is detected based on cable connection signal PISW that inlet 230 and connector 40 are connected, CPU 386 turns on switch SW1. As a result, the potential of pilot signal CPLT is lowered from V1 and pilot signal CPLT oscillates. CPU 386 senses the allowable current value of charging cable 20, based on the duty ratio of pilot signal CPLT.

When the allowable current value of charging cable 20 is detected and preparation for charging of power storage device 180 is completed, CPU 386 turns on switch SW2. Accordingly, the potential of pilot signal CPLT decreases to V3, and CCID relay 330 in CCID 310 is turned on. After this, CPU 386 turns on DFR 350. Accordingly, the electric power from external power supply 402 is fed to AC/DC converter 220 (Fig. 2). Based on voltage VAC detected by voltage sensor 370 and current IAC detected by current sensor 372, CPU 386 performs charging control within the range where current IAC does not exceed the allowable current value of charging cable 20 of which the vehicle is informed by the duty ratio of pilot signal CPLT.

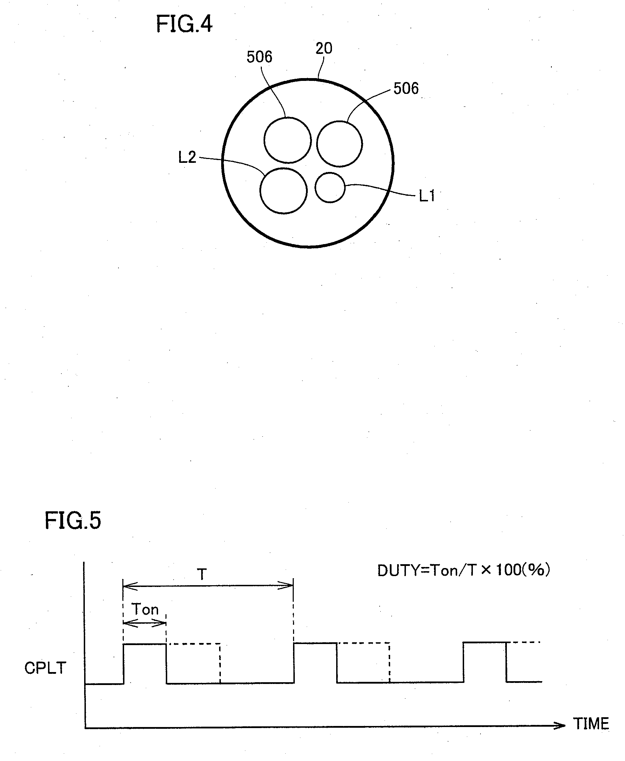

Fig. 4 is a schematic configuration diagram of the inside of charging cable 20. Referring to Fig. 4, in charging cable 20, an electric power line 506, control pilot line L1, and a ground line L2 (Fig. 3) are disposed. Electric power line 506 transmits charging electric power fed from external power supply 402. Control pilot line L1 transmits pilot signal CPLT. Ground line L2 is connected to the earth outside the vehicle.

Fig. 5 is a diagram showing a waveform of pilot signal CPLT generated by control pilot circuit 332. Referring to Fig. 5, pilot signal CPLT oscillates with a specified period T. Here, a pulse width Ton of pilot signal CPLT is set based on a predetermined allowable current value (rated current) of charging cable 20. By means of the duty ratio expressed as the ratio of pulse width Ton to period T, control pilot circuit 332 informs ECU 240 of vehicle 60 of the allowable current value of charging cable 20.

It is noted that the allowable current value is defined for each charging cable. Depending on the type of the charging cable, the allowable current value varies, and therefore, the duty ratio of pilot signal CPLT also varies. ECU 240 of vehicle 60 receives, through control pilot line L1, pilot signal CPLT sent from control pilot circuit 332 provided on charging cable 20, and senses the duty ratio of the received pilot signal CPLT to thereby sense the allowable current value of charging cable 20 and perform charging control so that the charging current will not exceed the allowable current value. As will be detailed later herein, the duty ratio of pilot signal CPLT is changed, in accordance with the temperature of charging cable 20 that is detected by temperature sensor 342 provided on cable reel 30 of charging apparatus 10.

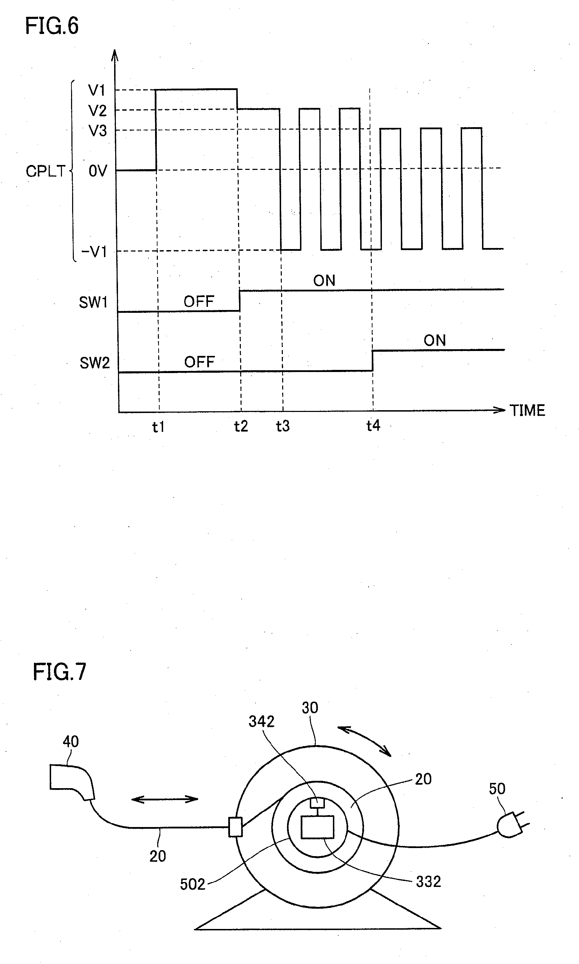

Fig. 6 is a timing chart of pilot signal CPLT and switches SW1 and SW2 at the time of external charging. Referring to Fig. 6, at time t1, as plug 50 of charging cable 20 is connected to outlet 400 of external power supply 402, control pilot circuit 332 receives the electric power from external power supply 402 and generates pilot signal CPLT.

At this time, connector 40 of charging cable 20 is not connected to inlet 230 of vehicle 60, and the potential of pilot signal CPLT is V1 (12V for example) and pilot signal CPLT is in the non-oscillating state.

At time t2, as connector 40 is connected to inlet 230, the potential of pilot signal CPLT is decreased to V2 (9V for example) by pull-down resistor R2 of resistive circuit 380. Then, at time t3, control pilot circuit 332 causes pilot signal CPLT to oscillate. The allowable current value of charging cable 20 is sensed in CPU 386 of vehicle 60, based on the duty ratio of pilot signal CPLT. When preparation for charging control is completed, switch SW2 is turned on by CPU 386 at time t4. Then, the potential of pilot signal CPLT is further decreased to V3 (6V for example) by pull-down resistor R3 of resistive circuit 380.

When the potential of pilot signal CPLT decreases to V3, CCID relay 330 of CCID 310 is turned on by control pilot circuit 332. DFR 350 is thereafter turned on in vehicle 60 and power storage device 180 is charged from external power supply 402.

### Configuration of Cable Reel 30

Fig. 7 is a diagram illustrating a configuration of cable reel 30 shown in Fig. 1. Referring to Fig. 7, cable reel 30 includes a drum 502, charging cable 20, control pilot circuit 332, and temperature sensor 342. Charging cable 20 is reeled up in such a manner that the cable is wound around drum 502, and the connector 40 side of the cable can be drawn out.

Control pilot circuit 332 and temperature sensor 342 are provided for example within drum 502. Temperature sensor 342 is tightly attached for example to the inner periphery of drum 502, detects the temperature of charging cable 20 which is wound around drum 502, and outputs the detected temperature to control pilot circuit 332.

Control pilot circuit 332 generates pilot signal CPLT as described above, and outputs the generated pilot signal CPLT to control pilot line L1 (Figs. 3, 4) of charging cable 20. Here, as will be described later herein, control pilot circuit 332 changes the duty ratio of pilot signal CPLT as required, based on the value of the detected temperature of charging cable 20 that is received from temperature sensor 342.

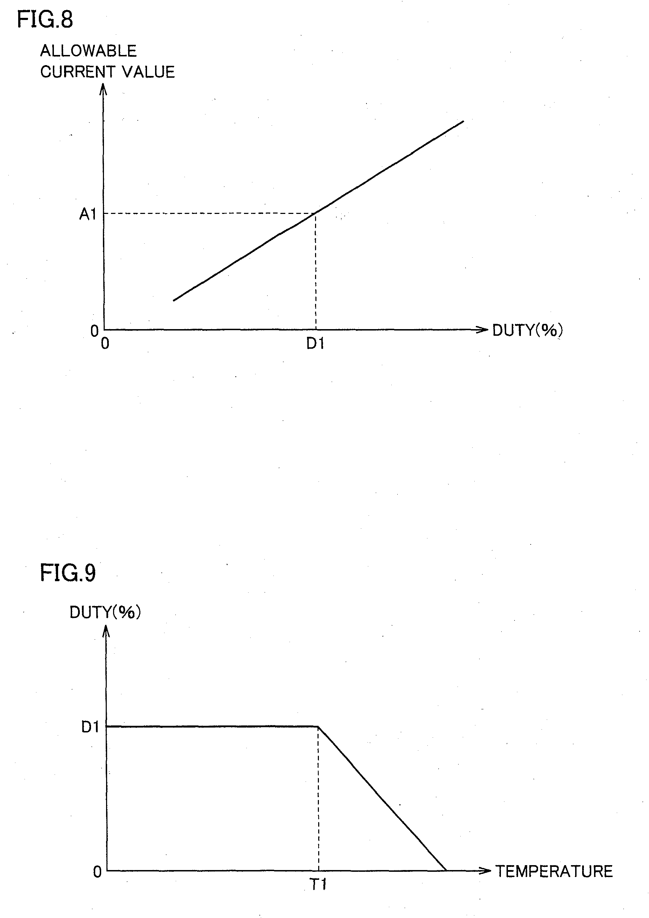

Fig. 8 is a diagram showing a relation between the allowable current value of charging cable 20 and the duty ratio of pilot signal CPLT. Referring to Fig. 8, the duty ratio of pilot signal CPLT is set in direct proportion to a predetermined allowable current value of charging cable 20. It is noted that the duty ratio of pilot signal CPLT may also be set so that the duty ratio changes in a stepwise manner, which, however, is not particularly illustrated.

Such a relation between the allowable current value of charging cable 20 and the duty ratio of pilot signal CPLT is prepared in the form of a map, and control pilot circuit 332 sets the duty ratio of pilot signal CPLT based on the allowable current value of charging cable 20.

Here, in this first embodiment, pilot signal CPLT which has been set based on the allowable current value of charging cable 20 is changed in accordance with the temperature of charging cable 20 detected by temperature sensor 342. Specifically, when external charging is performed while charging cable 20 is wound on cable reel 30, charging cable 20 could be overheated due to insufficient heat dissipation from charging cable 20. In the case where charging cable 20 is overheated, the charging electric power has to be reduced. In the first embodiment, the temperature of charging cable 20 wound on cable reel 30 is detected by temperature sensor 342 and, as the temperature of charging cable 20 increases, the duty ratio of pilot signal CPLT is changed so that the allowable current value of charging cable 20 decreases. In this way, the charging current is reduced under charging control over vehicle 60, and charging cable 20 is prevented from being overheated.

Fig. 9 is a diagram showing a relation between the temperature of charging cable 20 and the duty ratio of pilot signal CPLT. While Fig. 9 illustrates the case where the allowable current value of charging cable 20 is A1 and the duty ratio of pilot signal CPLT is D1 (Fig. 8) by way of example, the same relation as the relation shown in Fig. 9 holds as well if the duty ratio has a value other than D1.

Referring to Fig. 9, when the temperature of charging cable 20 detected by temperature sensor 342 exceeds rated temperature T1 of charging cable 20, the duty ratio is changed so that the duty ratio is smaller as the temperature rises. Pilot signal CPLT having the duty ratio thus changed is then transmitted to vehicle 60. It is noted that the temperature threshold value based on which whether to change the duty ratio is determined may not be provided and accordingly the duty ratio may be changed so that the duty ratio is smaller as the temperature rises, which, however, is not particularly illustrated.

Such a relation between the duty ratio of pilot signal CPLT and the temperature of charging cable 20 is prepared in the form of a map. Based on the temperature of charging cable 20 detected by temperature sensor 342, control pilot circuit 332 changes the duty ratio of pilot signal CPLT.

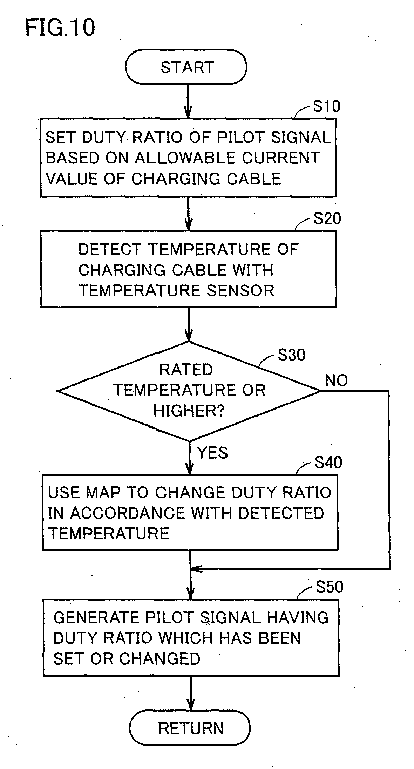

Fig. 10 is a flowchart for illustrating a process procedure for generation of pilot signal CPLT. Referring to Fig. 10, control pilot circuit 332 uses the prepared map defining the relation as shown in Fig. 8 to set the duty ratio of pilot signal CPLT based on the allowable current value of charging cable 20 (step S10).

Subsequently, temperature sensor 342 provided on cable reel 30 is used to detect the temperature of charging cable 20 (step S20). Control pilot circuit 332 then determines whether or not the detected temperature of charging cable 20 is rated temperature T1 or higher of charging cable 20 (step S30).

When control pilot circuit 332 determines that the temperature of charging cable 20 is rated temperature T1 or higher (YES in step S30), control pilot circuit 332 uses the prepared map defining the relation shown in Fig. 9 to change the duty ratio of pilot signal CPLT based on the temperature of charging cable 20 detected in step S20 (step S40). In contrast, when control pilot circuit 332 determines in step S30 that the temperature of charging cable 20 is lower than rated temperature T1 (NO in step S30), control pilot circuit 332 proceeds to step S50 without performing the operation in step S40.

Control pilot circuit 332 then generates pilot signal CPLT having the duty ratio changed in step S40 (if the duty ratio is not changed in step S40, the duty ratio set in step S10) (step S50).

Thus, the first embodiment enables the duty ratio of pilot signal CPLT to be changed in accordance with the temperature of charging cable 20 detected by temperature sensor 342 provided on cable reel 30. Therefore, in the case where the temperature condition of charging cable 20 conveyed to vehicle 60 by means of pilot signal CPLT suggests that charging cable 20 could be overheated, charging control over the vehicle can take measures to reduce the charging current. In this way, the first embodiment can prevent charging cable 20 from being overheated.

### [Modification]

According to the description above, the duty ratio of pilot signal CPLT is set so that the duty ratio is smaller as the allowable current value of charging cable 20 is smaller as shown in Fig. 8 and, based on this relation, the duty ratio is changed so that the duty ratio is decreased after the temperature of charging cable 20 exceeds rated temperature T1 as shown in Fig. 9.

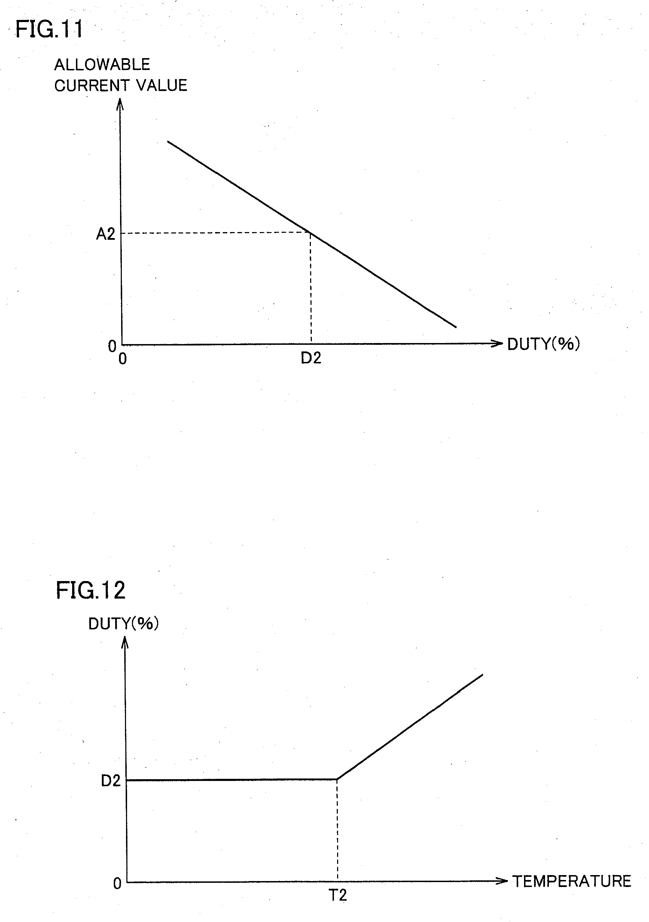

Alternatively, as shown in Fig. 11, the duty ratio of pilot signal CPLT may be set so that the duty ratio is larger as the allowable current value of charging cable 20 is smaller and, based on this relation, the duty ratio may be changed so that the duty ratio is increased after the temperature of charging cable 20 exceeds a rated temperature T2 as shown in Fig. 12.

### [Second Embodiment]

The greater the wound length of the charging cable wound by the cable reel, the lower the heat dissipation from the charging cable and thus the higher the possibility that the charging cable is overheated. A second embodiment accordingly changes the duty ratio of pilot signal CPLT in accordance with the wound length of charging cable 20 wound by the cable reel.

The overall configuration and the electrical configuration of a charging system as well as the configuration of a vehicle to be charged by a charging apparatus in the second embodiment are identical to those of the first embodiment.

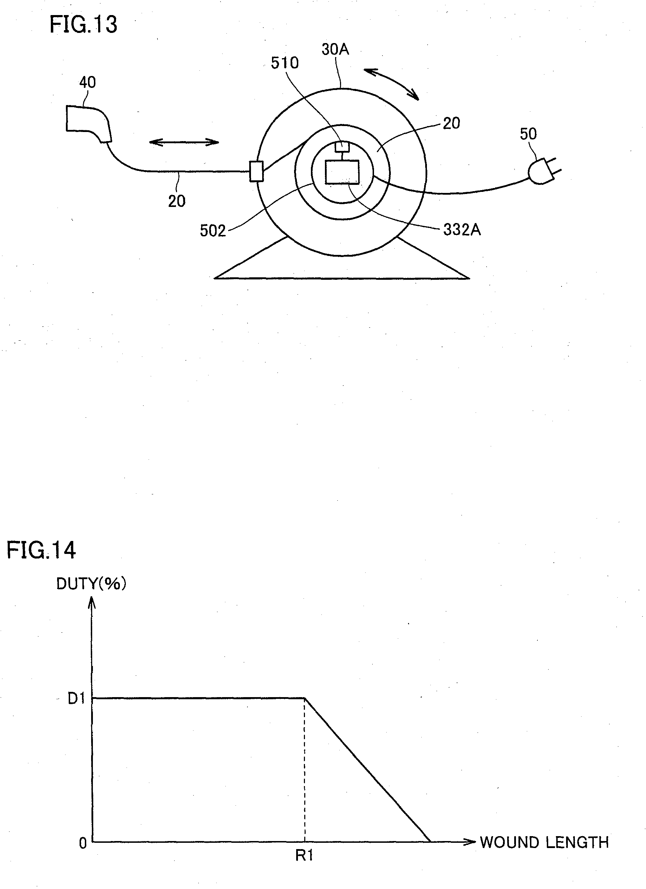

Fig. 13 is a diagram showing a configuration of a cable reel in the second embodiment. Referring to Fig. 13, cable reel 30A differs in configuration from cable reel 30 in the first embodiment shown in Fig. 7 in that the former includes a wound-status sensor 510 and a control pilot circuit 332A instead of temperature sensor 342 and control pilot circuit 332 respectively.

Wound-status sensor 510 is used for detecting the wound length of charging cable 20. For example, relative to the rotational position of drum 502 when charging cable 20 is completely drawn out, the wound length can be estimated based on the extent to which drum 502 is rotated. The wound length may be estimated by wound-status sensor 510 or by control pilot circuit 332A.

Control pilot circuit 332A generates pilot signal CPLT and outputs the pilot signal to control pilot line L1 (Figs. 3 and 4) of charging cable 20. Like control pilot circuit 332 in the first embodiment, control pilot circuit 332A uses the relation shown in Fig. 8 to set the duty ratio of pilot signal CPLT based on the allowable current value of charging cable 20.

Here, while the first embodiment changes the duty ratio of pilot signal CPLT, which has been set based on the allowable current value of charging cable 20, in accordance with the temperature of charging cable 20 detected by temperature sensor 342, the second embodiment changes the duty ratio in accordance with the wound length of charging cable 20 that is detected by wound-status sensor 510 as described below.

Fig. 14 is a diagram showing a relation between the wound length of charging cable 20 wound by cable reel 30A and the duty ratio of pilot signal CPLT. While Fig. 14 also illustrates the case where the allowable current value of charging cable 20 is A1 and the duty ratio of pilot signal CPLT is D1 (Fig. 8) by way of example, the relation shown in Fig. 14 holds as well even if the duty ratio has a value other than D1.

Referring to Fig. 14, after the wound length of charging cable 20 detected by wound-status sensor 510 exceeds a wound length R1 determined in advance, the duty ratio is changed so that the duty ratio is lower as the wound length is larger. Pilot signal CPLT having the duty ratio thus changed is then conveyed to vehicle 60. It is noted that the threshold value (wound length R1) based on which whether to change the duty ratio is determined may not be provided and accordingly the duty ratio may be changed so that the duty ratio is smaller as the wound length increases, which, however, is not particularly illustrated.

Such a relation between the duty ratio of pilot signal CPLT and the wound length of charging cable 20 wound by cable reel 30A is prepared in the form of a map. Based on the wound length of charging cable 20 that is detected by means of wound-status sensor 510, control pilot circuit 332A changes the duty ratio of pilot signal CPLT.

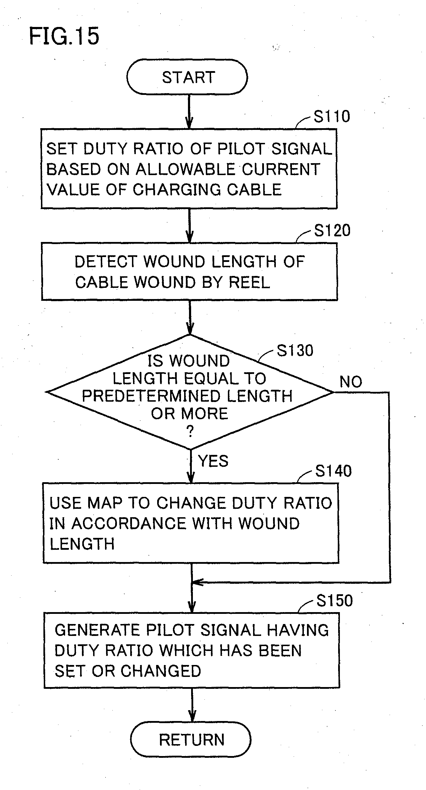

Fig. 15 is a flowchart for illustrating a process procedure for generation of pilot signal CPLT in the second embodiment. Referring to Fig. 15, control pilot circuit 332A uses the prepared map defining the relation shown in Fig. 8 to set the duty ratio of pilot signal CPLT based on the allowable current value of charging cable 20 (step S110).

Subsequently, wound-status sensor 510 provided on cable reel 30 is used to detect the wound length of charging cable 20 wound by cable reel 30A (step S120). Control pilot circuit 332A then determines whether or not the wound length of charging cable 20 thus detected is equal to or larger than a predetermined length (step S130). This predetermined length is determined in advance based for example on the allowable current value of charging cable 20.

When control pilot circuit 332A determines that the wound length of charging cable 20 is the predetermined length or more (YES in step S130), control pilot circuit 332A uses the prepared map defining the relation as shown in Fig. 14 to change the duty ratio of pilot signal CPLT based on the wound length of charging cable 20 that is detected in step S120 (step S140). In contrast, when control pilot circuit 332A determines in step S 130 that the wound length of charging cable 20 is smaller than the predetermined length (NO in step S130), control pilot circuit 332A proceeds to step S 150 without performing the operation in step S 140.

Control pilot circuit 332A then generates pilot signal CPLT having the duty ratio changed in step S 140 (if the duty ratio is not changed in step S 140, the duty ratio which is set in step S 110) (step S 150).

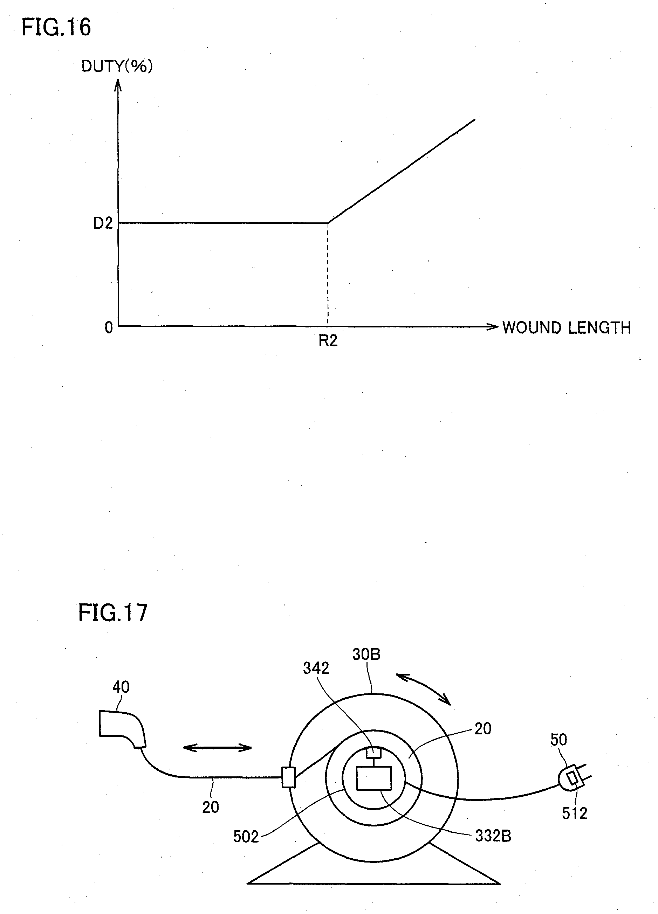

It is noted that in the case where the duty ratio of pilot signal CPLT is set so that the duty ratio is larger as the allowable current value of charging cable 20 is smaller as shown in Fig. 11, the duty ratio may be changed so that the duty ratio is larger after the wound length of charging cable 20 exceeds a predetermined length R2 as shown in Fig. 16.

Thus, the second embodiment enables the duty ratio of pilot signal CPLT to be changed in accordance with the wound length of charging cable 20 wound by cable reel 30A. Therefore, in the case where the temperature condition of charging cable 20 conveyed to vehicle 60 by means of pilot signal CPLT suggests that charging cable 20 could be overheated, charging control over the vehicle can take measures to reduce the charging current. In this way, the second embodiment can also prevent charging cable 20 from being overheated.

### [Third Embodiment]

Plug 50, which is a terminal for connection to an external power supply, could also be overheated together with charging cable 20. A third embodiment, in addition to the above-described first or second embodiment, detects the temperature of plug 50 and further changes the duty ratio of pilot signal CPLT in accordance with the temperature of plug 50.

Fig. 17 is a diagram showing a configuration of a cable reel in the third embodiment. Referring to Fig. 17, cable reel 30B differs in configuration from cable reel 30 in the first embodiment shown in Fig. 7 in that the former includes a control pilot circuit 332B instead of control pilot circuit 332. Further, plug 50 is provided with a temperature sensor 512.

Temperature sensor 512 detects the temperature of plug 50. The value of the temperature detected by temperature sensor 512 is transmitted to control pilot circuit 332B through a signal line (not shown). Control pilot circuit 332B has a function, in addition to the functions of control pilot circuit 332 described in connection with the first embodiment, of further changing the duty ratio of pilot signal CPLT in accordance with the temperature of plug 50 detected by temperature sensor 512.

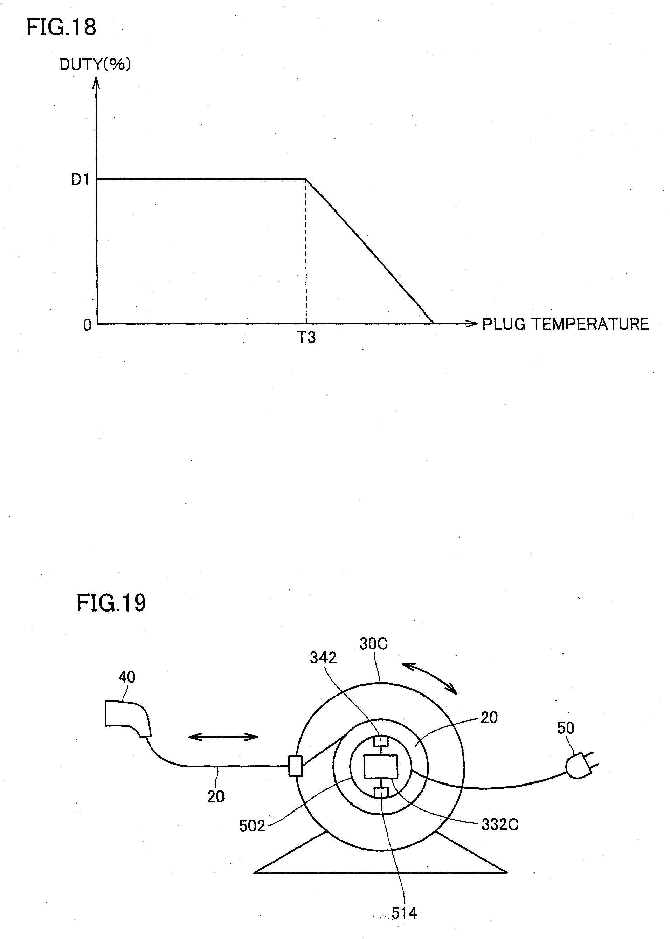

Fig. 18 is a diagram showing a relation between the temperature of plug 50 and the duty ratio of pilot signal CPLT. While Fig. 18 also illustrates the case where the allowable current value of charging cable 20 is A1 and the duty ratio of pilot signal CPLT is D1 (Fig. 8) by way of example, the same relation as the relation shown in Fig. 18 holds as well if the duty ratio has a value other than D1.

Referring to Fig. 18, when the temperature of plug 50 detected by temperature sensor 512 exceeds a predetermined temperature T3, the duty ratio is changed so that the duty ratio is smaller as the temperature rises. Pilot signal CPLT having the duty ratio thus changed is then transmitted to vehicle 60. It is noted that the temperature threshold value based on which whether to change the duty ratio is determined may not be provided and accordingly the duty ratio may be changed so that the duty ratio is smaller as the temperature rises, which, however, is not particularly illustrated.

Thus, the third embodiment enables the duty ratio of pilot signal CPLT to be further changed in accordance with the temperature of plug 50 that is detected by temperature sensor 512 provided to plug 50. Therefore, plug 50 can also be prevented from being overheated.

### [Fourth Embodiment]

A fourth embodiment, in addition to the above-described first or second embodiment, detects the voltage of an external power supply and, when a voltage drop of the external power supply is large, further changes the duty ratio of pilot signal CPLT so that the allowable current value of charging cable 20 is smaller.

Fig. 19 is a diagram showing a configuration of a cable reel in the fourth embodiment. Referring to Fig. 19, cable reel 30C differs in configuration from cable reel 30 in the first embodiment shown in Fig. 7 in that the former further includes a voltage sensor 514 and includes a control pilot circuit 332C instead of control pilot circuit 332.

Voltage sensor 514 is provided for example within drum 502, detects the voltage of external power supply 402 to which plug 50 is connected (Fig. 3), and outputs the detected voltage to control pilot circuit 332C. Control pilot circuit 332C has a function, in addition to the functions of control pilot circuit 332 described in connection with the first embodiment, of changing the duty ratio of pilot signal CPLT based on the detected value of voltage sensor 514 as described below.

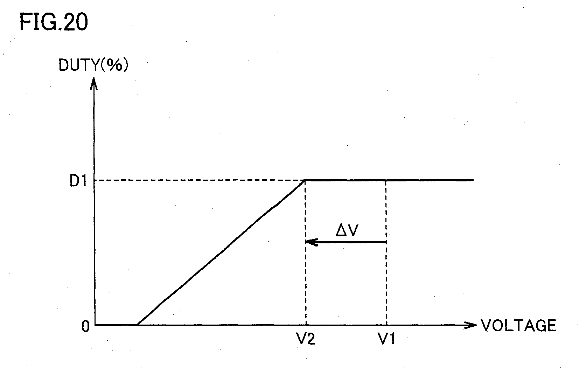

Fig. 20 is a diagram showing a relation between the voltage of an external power supply and the duty ratio of pilot signal CPLT. While Fig. 20 also illustrates the case where the allowable current value of charging cable 20 is A1 and the duty ratio of pilot signal CPLT is D1 (Fig. 8) by way of example, the relation shown in Fig. 20 holds as well even if the duty ratio has a value other than D1.

Referring to Fig. 20, voltage V1 represents a voltage when the external power supply has a normal state. When the voltage of the external power supply is smaller than a voltage V2 (the voltage drop from voltage V1 is ΔA), the duty ratio of pilot signal CPLT is changed so that the duty ratio is smaller. Pilot signal CPLT having the duty ratio thus changed is then transmitted to vehicle 60.

Thus, the fourth embodiment enables the duty ratio of pilot signal CPLT to be further changed in accordance with a voltage drop of an external power supply, and therefore can avoid abnormal charging when a voltage drop of the external power supply occurs.

In the above-described embodiments each, vehicle 60 uses AC/DC converter 220 to perform voltage conversion on the charging power which is fed from external power supply 402. Instead, the dedicated converter may not be provided, paired electric power lines from inlet 230 may be connected respectively to respective neutral points of motor generators 130, 150, and the voltage between the neutral points may be adjusted by inverters 200, 210 to perform voltage conversion on the charging power fed from external power supply 402.

Further, according to the description above, vehicle 60 is a hybrid vehicle having the engine and the motor generators mounted thereon as motive power sources for the vehicle to travel. The range in which the present invention is to be applied, however, is not limited to the hybrid vehicle, but includes an electric vehicle on which the engine is not mounted, a fuel cell vehicle having a fuel cell mounted thereon as a DC power supply, and the like.

It is noted that cable reels 30 and 30A to 30C described above each correspond to one embodiment of "reel" of the present invention, and temperature sensor 342 corresponds to one embodiment of "temperature sensor" of the present invention. Further, control pilot circuits 332 and 332A to 332C each correspond to an embodiment of "controller" of the present invention, and temperature sensor 512 corresponds to one embodiment of "plug temperature sensor" of the present invention. Furthermore, voltage sensor 514 corresponds to one embodiment of "voltage sensor" of the present invention.

It should be construed that the embodiments disclosed herein are by way of illustration in all respects, not by way of limitation. It is intended that the scope of the present invention is defined by claims, not by the above description of the embodiments, and encompasses all modifications and variations equivalent in meaning and scope to the claims.

### REFERENCE SIGNS LIST

10 charging apparatus; 20 charging cable; 30, 30A-30C cable reel; 40 connector; 50 plug; 60 vehicle; 110 engine; 120 power split device; 130, 150 motor generator; 140 reduction gear; 160 drive shaft; 170 drive wheel; 180 power storage device; 190 boost converter; 200, 210 inverter; 220 AC/DC converter; 230 inlet; 240 ECU; 310 CCID; 320 limit switch; 330 CCID relay; 332, 332A-332C control pilot circuit; 334 oscillator; 336, 370, 514 voltage sensor; 338 CPLT-ECU; 342, 512 temperature sensor; 350 DFR; 360 LC filter; 372 current sensor; 380 resistive circuit; 382, 384 input buffer; 386 CPU; 388 vehicle earth; 400 outlet; 402 external power supply; 502 drum; 506 electric power line; 510 wound-status sensor; R1 resistive element; R2, R3 pull-down resistor; SW1, SW2 switch; L1 control pilot line; L2 ground line

## Claims

1. A charging apparatus for supplying electric power from an external power supply (402) to a vehicle (60), said external power supply being located externally to the vehicle and said vehicle being configured to be chargeable by said external power supply, the charging apparatus comprising:
a charging cable (20) capable of electrically connecting said external power supply with said vehicle;
a reel (30) capable of winding said charging cable;
a temperature sensor (342) provided to said reel for detecting a temperature of said charging cable; and
a controller (332) configured to generate a pulse signal (CPLT) having a duty ratio determined in advance in accordance with a predetermined allowable current value of said charging cable, and to be able to transmit the generated pulse signal to said vehicle,
said controller changing the duty ratio of said pulse signal in accordance with the temperature of said charging cable detected by said temperature sensor.

2. The charging apparatus according to claim 1, wherein
said controller changes said duty ratio so that the allowable current value of said charging cable is smaller as the temperature of said charging cable detected by said temperature sensor is higher.

3. A charging apparatus for supplying electric power from an external power supply (402) to a vehicle (60), said external power supply being located externally to the vehicle and said vehicle being configured to be chargeable by said external power supply, the charging apparatus comprising:
a charging cable (20) capable of electrically connecting said external power supply with said vehicle;
a reel (30A) capable of winding said charging cable; and
a controller (332A) configured to generate a pulse signal (CPLT) having a duty ratio determined in advance in accordance with a predetermined allowable current value of said charging cable, and to be able to transmit the generated pulse signal to said vehicle,
said controller changing the duty ratio of said pulse signal in accordance with a wound length of said charging cable wound by said reel.

4. The charging apparatus according to claim 3, wherein
said controller changes said duty ratio so that the allowable current value of said charging cable is smaller as the wound length of said charging cable wound by said reel is larger.

5. The charging apparatus according to any of claims 1 to 4, further comprising:
a plug (50) for connecting said charging cable to said external power supply; and
a plug temperature sensor (512) for detecting a temperature of said plug, wherein
said controller (332B) further changes the duty ratio of said pulse signal in accordance with the temperature of said plug detected by said plug temperature sensor.

6. The charging apparatus according to any of claims 1 to 4, further comprising a voltage sensor (514) for detecting a voltage of said external power supply, wherein
said controller (332C) further changes the duty ratio of said pulse signal in accordance with a voltage drop of said external power supply.
